# EUROPEAN PATENT APPLICATION

(11) **EP 4 488 962 A1**
(43) Date of publication of application: **08.01.2025**
(21) Application number: 24186276.2
(22) Date of filing: 03.07.2024
(51) Int. Cl.: G06V 20/59, G06V 10/82, G06V 40/18, G06V 40/20

(54) **PUPIL DYNAMICS, POSE, AND PERFORMANCE FOR INFERRING INTENT**

(30) Priority: 03.07.2023 US 202318217718
(71) Applicant: Rockwell Collins, Inc., Cedar Rapids, IA 52498 (US)
(72) Inventor: WU, Peggy, Ellicott City, MD, 21042 (US)
(74) Representative: Dehns

(57) **Abstract**

A pilot monitoring system receives data of a pilot's pose such as arm / hand positions and eyes to detect their gaze and pupil dynamics, coupled with knowledge about their current task to detect what a pilot is paying attention to, and temporally predict what they may do next. The system may use interactions between the pilot and the instrumentation to estimate a probability distribution of the next intention of the pilot. Such probability distribution may be used subsequently to evaluate the performance or training effectiveness and readiness of the pilot. The system determine data that will be necessary for a later pilot action based on the probability distribution, and compile that data from avionics systems for later display.

## Description

### GOVERNMENT LICENSE RIGHTS

The U.S. Government has a paid-up license in this invention and the right in limited circumstances to require the patent owner to license others on reasonable terms as provided by the terms of DE-AR0001097 awarded by The United States Department of Energy.

### BACKGROUND

Gaze and eye movements are key indicators of pilot attention and a precursor to the intention to act. In a highly dynamic environment such as during high tempo flight missions, a pilot may rely on automatized behaviors from training and anticipate next steps even before the pilot is consciously aware.

Consequently, it would be advantageous if an apparatus existed that is suitable for monitoring a pilot's situational awareness and determining a pilot's future intentions.

### SUMMARY

In one aspect, there is provided a pilot monitoring system that receives data of a pilot's pose such as arm / hand positions and eyes to detect their gaze and pupil dynamics, coupled with knowledge about their current task to detect what a pilot is paying attention to, and temporally predict what they may do next.

In embodiments, the system may use interactions between the pilot and the instrumentation to estimate a probability distribution of the next intention of the pilot. Such probability distribution may be used subsequently to evaluate the performance or training effectiveness and readiness of the pilot.

In embodiments, the system determine data that will be necessary for a later pilot action based on the probability distribution, and compile that data from avionics systems for later display.

It is to be understood that both the foregoing general description and the following detailed description are exemplary and explanatory only and should not restrict the scope of the invention as defined by the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram of a system suitable for implementing embodiments of the incentive concepts disclosed herein;
- FIG. 2: shows a flowchart of an exemplary embodiment of the inventive concepts disclosed herein;
- FIG. 3: shows a graph of probability of future actions according to an exemplary embodiment; and
- FIG. 4: shows a block diagram of a neural network according an exemplary embodiment of the inventive concepts disclosed herein.

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways within the scope of the claims. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a pilot monitoring system that receives data of a pilot's pose such as arm / hand positions and eyes to detect their gaze and pupil dynamics, coupled with knowledge about their current task to detect what a pilot is paying attention to, and temporally predict what they may do next. The system may use interactions between the pilot and the instrumentation to estimate a probability distribution of the next intention of the pilot. Such probability distribution may be used subsequently to evaluate the performance or training effectiveness and readiness of the pilot. The system determine data that will be necessary for a later pilot action based on the probability distribution, and compile that data from avionics systems for later display.

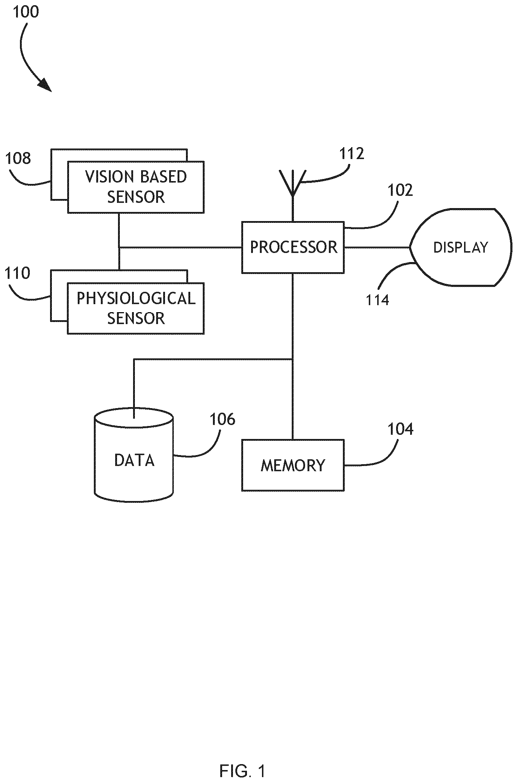

Referring to FIG. 1, a block diagram of a system 100 suitable for implementing embodiments of the incentive concepts disclosed herein is shown. The system 100 includes a processor 102, memory 104 in data communication with the processor 102 for storing processor executable code, one or more cameras 108 for receiving an image data stream, and one or more physiological sensors 110. Physiological sensors 110 may include devices such as an electroencephalograph (EEG), functional near-infrared spectroscopy (fNIRs), or any other such biometric data sensing device.

In at least one embodiment, the one or more cameras 108 record eye movement / gaze of a pilot, eye lid position, hand / arm position and movement, and other physical data landmarks. The processor executable code configures the processor 102 to continuously log the camera data in a data storage element 106. The processor 102 analyzes the camera data to identify gaze and pupil dynamics (e.g., pupil response and changes over time), and physical pose estimate for the pilot.

In at least one embodiment, the camera data are correlated with discreet portions of a flight task, and / or specific stimuli such as instrument readings, alerts, or the like. The processor 102 determines a probability distribution of potential future actions based on the camera data and correlated flight task / stimuli. Trained pilots often engage in automatized behaviors before they are consciously aware of their actions. Those automatized behaviors may be identified via the camera data, including eye tracking data and hand / arm pose estimate. In at least one embodiment, those automatized behaviors may be associated with a probability of future actions.

The processor 102 may also receive physiological data from one or more physiological sensors 110. In at least one embodiment, the processor 102 may correlate camera data (including at least gaze and pupil dynamics) with physiological data. The processor 102 may compare the camera and physiological data to stored profiles. Such profiles may be specific to the user. Alternatively, or in addition, the profiles may represent some standard correlation between automatized behavior and future actions.

In at least one embodiment, the processor 102 may identify information generally corelated to the future actions; for example, certain behaviors may be associated with a future need to change direction or attitude, necessitating updated radar and flight path data. The processor 102 may then begin compiling such correlated data in anticipation that the pilot will perform those future actions. For example, the processor 102 may determine new radar settings and / or begin populating a change to flight plan for later transmission.

In at least one embodiment, the processor 102 may alert a remote party such as ground control personnel via a wireless communication device 112. Alternatively, or in addition, the processor 102 may render the correlated data on a display 114 to indicate what data will be available and what future actions the processor 102 has anticipated.

In at least one embodiment, the processor 102 transfers the stored camera data and other correlated system and task data to an offline storage device for later analysis and correlation to historic data and other outside factors such as crew rest, crew sleet rhythms, flight schedules, etc. Such transfer may be in real time via the wireless communication device 112.

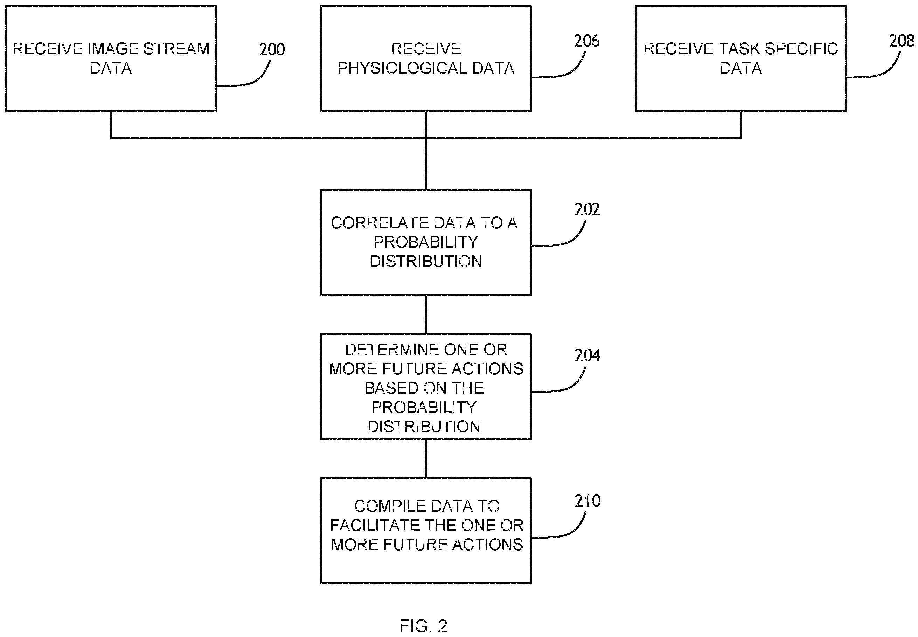

Referring to FIG. 2, a flowchart of an exemplary embodiment of the inventive concepts disclosed herein is shown. A computer system implementing embodiments of the inventive concepts disclosed herein receives 200 an image stream corresponding to one or more vision-based sensors. The image stream is processed for eye tracking data (including pupil dynamics and eyelid position) and to determine physiological landmarks such as hands and arms to generate a pose estimate for the pilot. Such data is continuously logged and correlated 202 to a probability distribution of future actions of the pilot.

In at least one embodiment, the probability distribution is used to determine 204 likely future actions by the pilot. In at least one embodiment, future actions may be defined by a mathematical deviation along the probability curve. For example, the probability curve may define windows of probable future actions within a certain standard deviation.

In at least one embodiment, the system receives 206 physiological data from one or more physiological sensors such as an EEG and / or an fNIRs. Such physiological data provides the addition metric of neuroactivity when determining the probability of future actions. Likewise, the system may receive data related to factors specific to the task 208 Such task specific data provides the additional metric of context when determining the probability of future actions. Such analysis may include processing via machine learning, neural network algorithms. Tasks may define specific future actions or future action potentialities from which to make a weighted probability distribution.

In at least one embodiment, the system may compile 210 data to facilitate the implementation of one or more of the future actions without the intervention of the pilot, and potentially before the pilot has made a determination of what future actions will be performed. The system may prioritize data compilation based on the determined 204 probability of each future action.

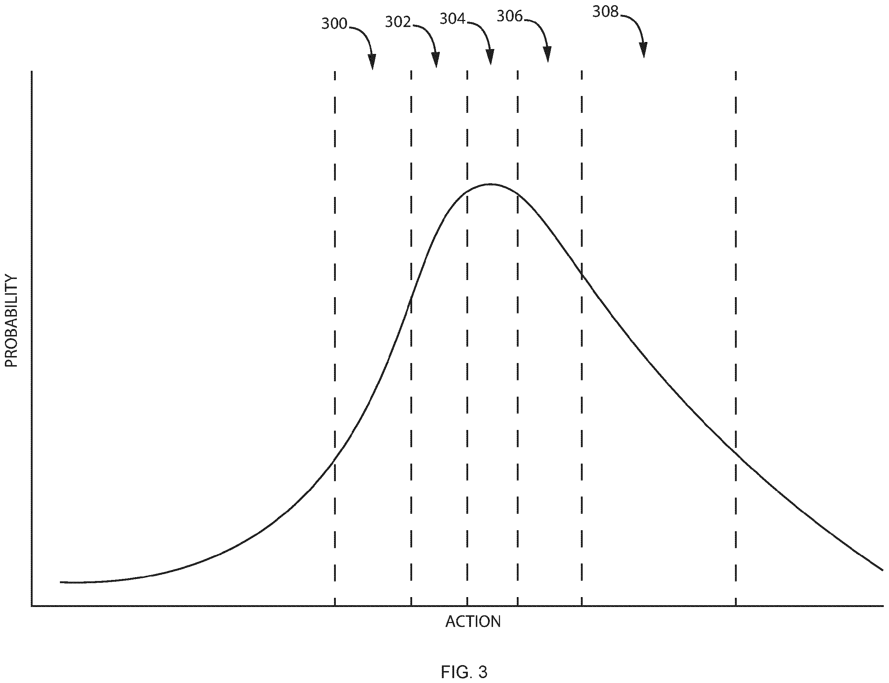

Referring to FIG. 3, a graph of probability of future actions according to an exemplary embodiment is shown. For any specific task or distinct portion of a task, a monitoring system utilizes camera data for eye tracking and pose estimation, along with physiological and task specific data, to produce a probability distribution of future actions. Actions may be divided into windows of probability 300, 302, 304, 306, 308 that may be defined by threshold deviations from some maximum probability. Alternatively, or in addition, the windows of probability 300, 302, 304, 306, 308 that may be defined by some threshold total probability for discreet actions (for example, each discreet action may be associated with an antiderivative corresponding to an area defined by a portion of the probability curve.

The system may determine desired data associated with each window of probability 300, 302, 304, 306, 308, and begin compiling such data. The compilation process may be weighted according to the total probability of each window of probability 300, 302, 304, 306, 308.

In at least one embodiment, the system may define certain minimum thresholds of probability. Such minimum threshold may be defined by previous examples of experts performing similar tasks or by a user specific profile.

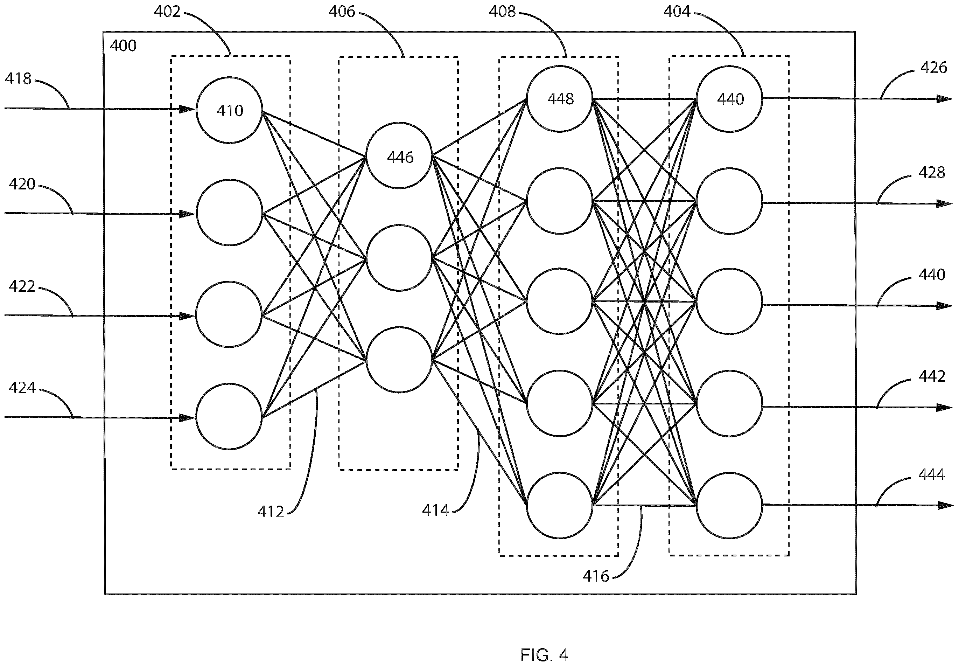

Referring to FIG. 4, a block diagram of a neural network 400 according an exemplary embodiment of the inventive concepts disclosed herein is shown. The neural network 400 comprises an input layer 402 that receives external inputs (including physiological signals, such as EEG and fNIRs, camera data, and potentially user or task specific profiles), and output layer 404, and a plurality of internal layers 406, 408. Each layer comprises a plurality of neurons or nodes 410, 436, 438, 440. In the input layer 402, each node 410 receives one or more inputs 418, 420, 422, 424 corresponding to a digital signal and produces an output 412 based on an activation function unique to each node 410 in the input layer 402. An activation function may be a Hyperbolic tangent function, a linear output function, and / or a logistic function, or some combination thereof, and different nodes 410, 436, 438, 440 may utilize different types of activation functions. In at least one embodiment, such activation function comprises the sum of each input multiplied by a synaptic weight. The output 412 may comprise a real value with a defined range or a Boolean value if the activation function surpasses a defined threshold. Such ranges and thresholds may be defined during a training process. Furthermore, the synaptic weights are determined during the training process.

Outputs 412 from each of the nodes 410 in the input layer 402 are passed to each node 436 in a first intermediate layer 406. The process continues through any number of intermediate layers 406, 408 with each intermediate layer node 436, 438 having a unique set of synaptic weights corresponding to each input 412, 414 from the previous intermediate layer 406, 408. It is envisioned that certain intermediate layer nodes 436, 438 may produce a real value with a range while other intermediated layer nodes 436, 438 may produce a Boolean value. Furthermore, it is envisioned that certain intermediate layer nodes 436, 438 may utilize a weighted input summation methodology while others utilize a weighted input product methodology. It is further envisioned that synaptic weight may correspond to bit shifting of the corresponding inputs 412, 414, 416.

An output layer 404 including one or more output nodes 440 receives the outputs 416 from each of the nodes 438 in the previous intermediate layer 408. Each output node 440 produces a final output 426, 428, 430, 432, 434 via processing the previous layer inputs 416, the final output 426, 428, 430, 432, 434 corresponding to a probability distribution of predicted future actions. Such outputs may comprise separate components of an interleaved input signal, bits for delivery to a register, or other digital output based on an input signal and DSP algorithm.

In at least one embodiment, each node 410, 436, 438, 440 in any layer 402, 406, 408, 404 may include a node weight to boost the output value of that node 410, 436, 438, 440 independent of the weighting applied to the output of that node 410, 436, 438, 440 in subsequent layers 404, 406, 408. It may be appreciated that certain synaptic weights may be zero to effectively isolate a node 410, 436, 438, 440 from an input 412, 414, 416, from one or more nodes 410, 436, 438 in a previous layer, or an initial input 418, 420, 422, 424.

In at least one embodiment, the number of processing layers 402, 404, 406, 408 may be constrained at a design phase based on a desired data throughput rate. Furthermore, multiple processors and multiple processing threads may facilitate simultaneous calculations of nodes 410, 436, 438, 440 within each processing layers 402, 404, 406, 408.

Layers 402, 404, 406, 408 may be organized in a feed forward architecture where nodes 410, 436, 438, 440 only receive inputs from the previous layer 402, 404, 406 and deliver outputs only to the immediately subsequent layer 404, 406, 408, or a recurrent architecture, or some combination thereof.

Embodiments of the inventive concepts disclosed herein are critical to enabling reduced crew or single pilot operations. An autonomous system can use detections of intent to estimate when to provide appropriate information to the pilot for an adaptive user interface scenario.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the scope of the invention as defined by the claims.

## Claims

1. A computer apparatus comprising:
at least one camera (108); and
at least one processor (102) in data communication with a memory (104) storing processor executable code; and
wherein the processor executable code configures the at least one processor to:
receive an image stream from the at least one camera;
determine a pilot pose estimate based on the image stream;
create a probability distribution of future actions by the pilot based on the pilot pose estimate; and
retrieve data corresponding to at least one future action in the probability distribution.

2. The computer apparatus of Claim 1, further comprising one or more physiological data recording devices (110) in data communication with the at least one processor, wherein:
the processor executable code further configures the at least one processor to:
receive physiological data from the one or more physiological data recording devices; and
correlate the physiological data with the image stream; and
creating the probability distribution reference to the physiological data.

3. The computer apparatus of Claim 2, wherein:
the processor executable code further configures the at least one processor to receive a task or user specific profile of pilot pose, physiological data, and subsequent pilot actions; and
creating the probability distribution includes reference to the task or user specific profile.

4. The computer apparatus of any preceding Claim, wherein the probability distribution defines a plurality of windows of probability, each associated with a discreet future action or set of future actions.

5. The computer apparatus of Claim 4, wherein the windows of probability are defined by threshold deviations from a peak probability.

6. The computer apparatus of any preceding Claim, wherein the pose estimate corresponds to an automatized behavior.

7. The computer apparatus of any preceding Claim, wherein the processor executable code further configures the at least one processor as a machine learning neural network.

8. A method comprising:
receiving an image stream from at least one camera (108);
determining a pilot pose estimate based on the image stream;
creating a probability distribution of future actions by the pilot based on the pilot pose estimate; and
retrieving data corresponding to at least one future action in the probability distribution.

9. The method of Claim 8, further comprising
receiving physiological data from one or more physiological data recording devices (110); and
correlating the physiological data with the image stream,
wherein creating the probability distribution reference to the physiological data.

10. The method of Claim 9, further comprising receiving a task or user specific profile of pilot pose, physiological data, and subsequent pilot actions, wherein creating the probability distribution includes reference to the task or user specific profile.

11. The method of Claim 8, 9 or 10, wherein the probability distribution defines a plurality of windows of probability, each associated with a discreet future action or set of future actions.

12. The method of Claim 11, wherein the windows of probability are defined by threshold deviations from a peak probability.

13. The method of any of Claims 8 to 12, wherein the pose estimate corresponds to an automatized behavior.

14. A pilot monitoring system comprising a computer apparatus as claimed in any preceding claim.
